# EUROPEAN PATENT SPECIFICATION

(11) **EP 0 369 544 B1**
(45) Date of publication and mention of the grant of the patent: **03.11.1993**
(21) Application number: 89202881.2
(22) Date of filing: 14.11.1989
(51) Int. Cl.: A22C 21/00

(54) **Apparatus for removing the legs from the back portion of poultry**
Vorrichtung zum Abtrennen der Beine von Schlachtgeflügel-Rückenstücken
Dispositif pour séparer de la région dorsale les pattes de volailles abattues

(30) Priority: 14.11.1988 NL 8802788
(43) Date of publication of application: 23.05.1990
(73) Proprietor: SYSTEMATE HOLLAND B.V., NL-3281 AC Numansdorp (NL)
(72) Inventor: Hazenbroek, Jacobus Eliza, NL-3281 AK Numansdorp (NL); Verrijp, Bastiaan, NL-3281 AG Numansdorp (NL)
(74) Representative: Kooy, Leendert Willem

(56) References cited:
- NL-A- 8 303 683
- US-A- 4 016 624
- US-A- 4 271 561
- US-A- 4 385 421

## Description

### FIELD OF THE INVENTION

This invention relates to the processing of raw poultry by which the poultry product is prepared for human consumption. More particularly, this invention relates to a method and apparatus for separating poultry parts, such as separating the back from the thighs of the birds in a continuous fully automated process.

An apparatus and a method as described in the preamble of claims 1 and 11, respectively, are known from Dutch patent application 83 03683.

### BACKGROUND OF THE INVENTION

When previously eviscerated poultry carcasses are to be cut into parts, it is desirable that the parts be accurately separated from one another so that bone chips or fragments are not formed during the separating process and are not found in the separated parts. Further, it is desirable that the separating functions be performed in a rapidly operating automated system which accurately separates the parts from one another.

In recent years, more extensive use has been made of the overhead conveyor system in poultry processing plants, whereby the birds are suspended from an overhead conveyor system in an inverted attitude, with the legs of the bird supported in shackles that are carried by the conveyor system. The shackles move the birds through one or more processing stages, such as a vent cutter, a bird opener, an eviscerator, a neck breaker, a lung puller, and a crop remover. Further, the birds can be moved through various parts separating devices so that the carcasses are subdivided into, for example, separated breasts, backs, wings, legs and thighs.

It has been known in the art to cut the legs from the back portion with rotary blades as the poultry is moved along the overhead conveyor. As a consequence of this manner of cutting, part of the peritoneum and some fat may be left on the legs, whereas the so-called oysters are often partially or entirely left on the back portion. For quality's sake, the opposite result should be achieved.

### SUMMARY OF THE INVENTION

Briefly described, the present invention comprises an apparatus for removing backs from the saddle of previously cut poultry carcasses as the poultry carcasses are moved along a processing path suspended invertedly by their legs from an overhead conveyor. The apparatus comprises a gripper member for gripping the back portion of a poultry carcass suspended by its legs and which is adapted to proceed along a closed conveyor loop at a higher speed than that of the overhead conveyor, and a guide means is provided which guides the back portion of the carcass in a portion of the closed loop until after the back has been removed from the thighs. With these provisions the back portion is accelerated with respect to the legs, unfolding the joints between the back and its thighs so that a correct incision can be made into the joints between the back and its thighs. Tearing the legs and thighs loose from the back of the carcass saddle is effected as the back of the carcass is moved between a large chain wheel incorporated in the closed conveyor loop and the guide means. The legs and thighs remain supported by the moving shackles of the overhead conveyor and proceed along the processing path of the overhead conveyor as the back is gripped by the gripper member and begins a downward arcuate movement away from the legs.

In a preferred embodiment the gripper member which engages and controls the movement of the back of the carcass comprises a conveyor chain with outwardly projecting pins which clutch and positively move the back of the bird at a faster rate of movement than the legs and thighs along a path that first is substantially parallel to the path of the legs and later diverges from the path of the legs.

The processing station preferably comprises means to center the poultry and to guide it along the blades. The centering means comprises a fork that is cantilevered on a blade-carrying plate and an enlarging, suspended centering valve at its upstream end for centering poultry of different sizes as the poultry enters the processing station.

The guide means can comprise guide rails for aligning poultry with the processing station and a generally V-shaped guide plate for straddling the center of the back portion of the carcass.

The blade-carrying plate can simultaneously serve as support for two pairs of fixed upper blades that operate between the back portion and the legs of the poultry carcass, and one pair of pivotably disposed lower blades that determine the external tear lines between the back portion and the legs of the carcass, the distance between the two upper blades on either side of the blade-carrying plate being bridged by a portion of the guide plate.

The first pair of fixed blades preferably comprises thin blades that cut up to the thigh bone, so that the joint can be unfolded. This unfolding is effected as the pointed chain conveys the back portion faster than the shackle conveyor moves the legs so that the joints are tensioned and the ball joint of the thigh tends to leave its socket. After the cutting action of the thin first pair of blades, the edges of the guide rails enter this initial cut, and the guide rail edges "seek" out the gap of the joints so that the second pair of blades can cut precisely between the bones of the joints. These two blades are sturdier than the first blades, so that they can cut the muscles that retain the joint and those around the joint, so that the thigh is detached from the back portion.

The pivotably disposed lower blades are preferably loaded or biased toward their respective cutting positions, e.g., by means of weights, to allow the blades to cut through muscle and tissue but to pivot as they contact the bone to avoid cutting the bone.

The invention will be described in more detail hereafter by reference to the drawings, in which a preferred embodiment of the invention is disclosed.

### BRIEF DESCRIPTION OF THE DRAWINGS

Fig. 1 is a perspective illustration of a part of an apparatus according to the present invention in a preferred form.

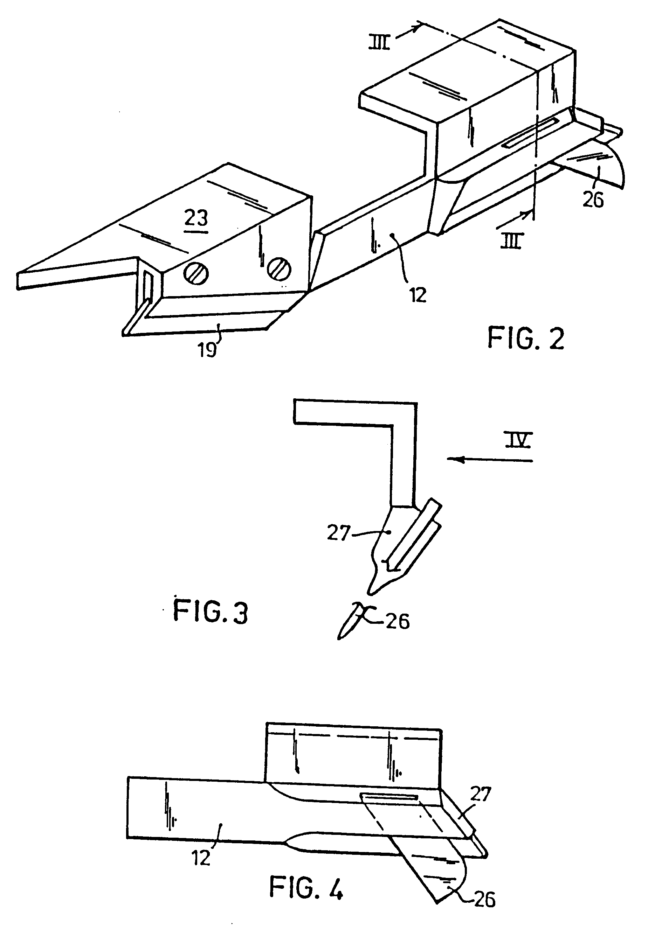

Fig. 2 is a perspective illustration of the apparatus of Fig. 1, showing first and second blades with pertaining supports on one side of the apparatus.

Fig. 3 shows a section along the line III-III of Fig. 2.

Fig. 4 shows a view in the direction of the arrow IV of Fig. 3.

Fig. 5 is a schematic illustration of a portion of the apparatus of Fig. 1, showing in particular a swiveling disc cutter.

Fig. 6 is a side elevational view of an apparatus according to the present invention in a second preferred form.

Fig. 7 is a plan view of the apparatus of Fig. 6.

Fig. 8 shows, on a larger scale and in perspective, a back portion and two legs of the poultry, in which one of the legs, contrary to reality, has been shown as if loose.

### DETAILED DESCRIPTION

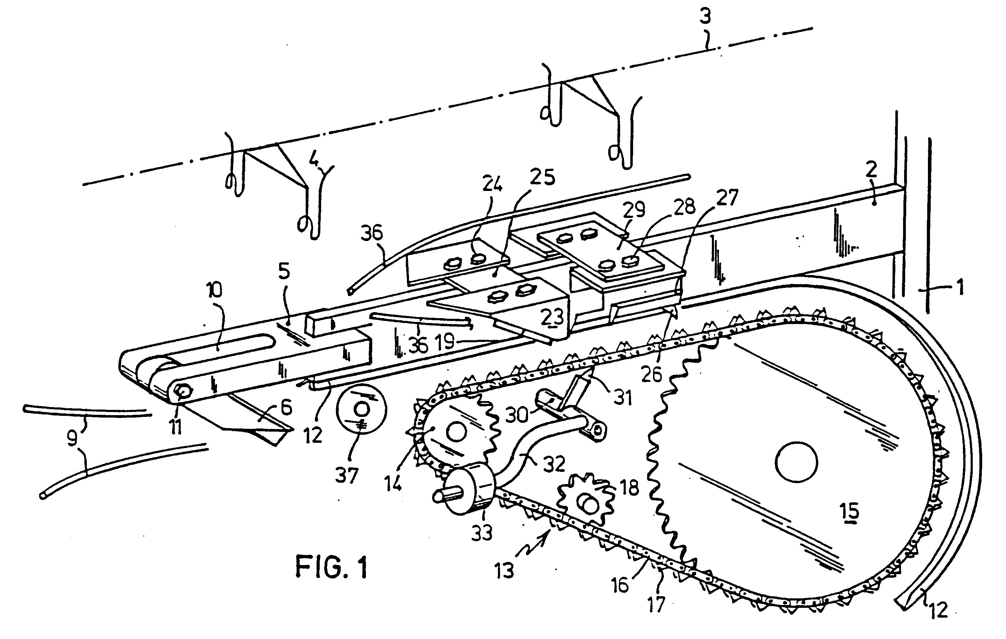

The apparatus shown in Fig. 1 has a frame of which only one of the columns 1 has been shown. A horizontal blade-carrying plate 2 is connected to this column 1, which plate is parallel to an overhead conveyor 3 with hooks 4.

At the end of the blade-carrying plate 2 facing away from the column 1 a fork 5 is disposed to which is pivotably mounted an enlarging, suspended centering guide or valve 6 at its upstream end.

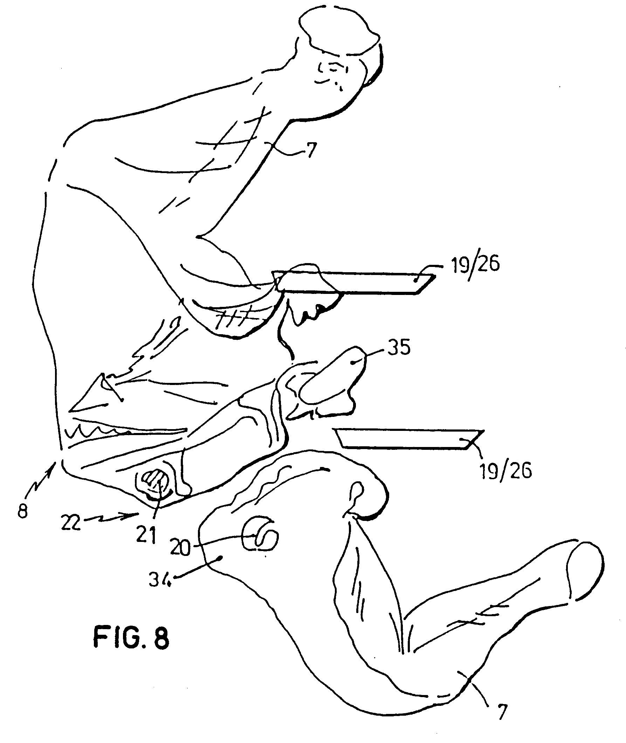

The hooks 4 are continuously moved from the left to the right in Fig. 1 by the conveyor 3. A pair of chicken legs 7, suspended from a hook 4 and interconnected by a back portion 8 (see Fig. 8), first externally contacts a pair of generally converging guide rails 9 and subsequently internally contacts the suspended centering guide 6 that pivots in a recess 10 of the fork 5 about a shaft mounted with screws 11.

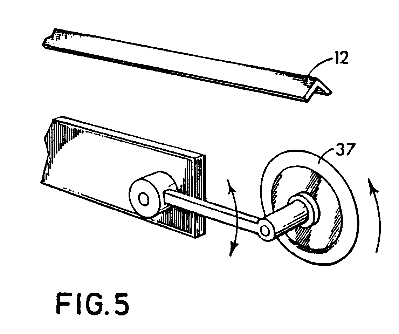

As illustrated in Figs. 1 and 5, the end of the centering guide has such a triangular shape that it lies in the extension of the guide plate 12 disposed under the bearing plate 2 in the position moved upwards by the poultry carcass. Thus, the centering guide ensures that the back portion 8 internally properly engages the guide plate 12.

The poultry portion to be processed is now properly centered and subsequently enters the actual processing station 13.

The processing station 13 has advancement means including a chain 16 that extends over a small chain wheel 14 and a large chain wheel 15 in a vertical plane, which chain has outwardly projecting pins 17. As the tension chain wheel 18 will not be able to prevent the top part of the chain 16 from sagging, it is recommended to support this chain there (in a manner not shown). The pins 17 centrally engage the outer side of the back portion 8 and convey this at a speed higher than the speed of the conveyors 3, so that the joints are tensioned.

The processing station 13 furthermore comprises the before-mentioned guide plate 12 that also extends around the large chain wheel 15 in circle sector shape and thus ensures that the back portion 8 remains in the closed loop of the gripper member 16 when it is torn loose from the legs 7, after which the back portion is released at the bottom of the processing station.

A first pair of fixed blades 19 comprise thin, relatively weak blades that cut up to the thigh bone as schematically shown in Fig. 8, so that the joints, comprising a ball 20 and a cup 21, can be unfolded. These first blades 19 are disposed in corner pieces 23 that have been arranged adjustably over the width with bolts 24 on a first transverse part 25 that is connected to the blade-carrying plate 2.

A second pair of fixed blades 26 comprise relatively strong, pointed blades that cut the muscles around the exposed joints 22 visible in Fig. 8. These second blades 26 have been disposed adjustably and exchangeably in blade retainers 27 that have been mounted with bolts 28 on a second transverse part 29 that is connected to the blade-carrying plate 2.

A pair of lower blades 31 is pivotably disposed about a horizontal shaft 30 that score the poultry to determine the external tear lines between the back portion 8 and the legs 7. A rod 32 bent in an S-shape is welded to each of the shafts 30, onto which rod weight can be slid and fixed so as to determine the cutting force. Of course it is also possible to replace the weights 33 with springs.

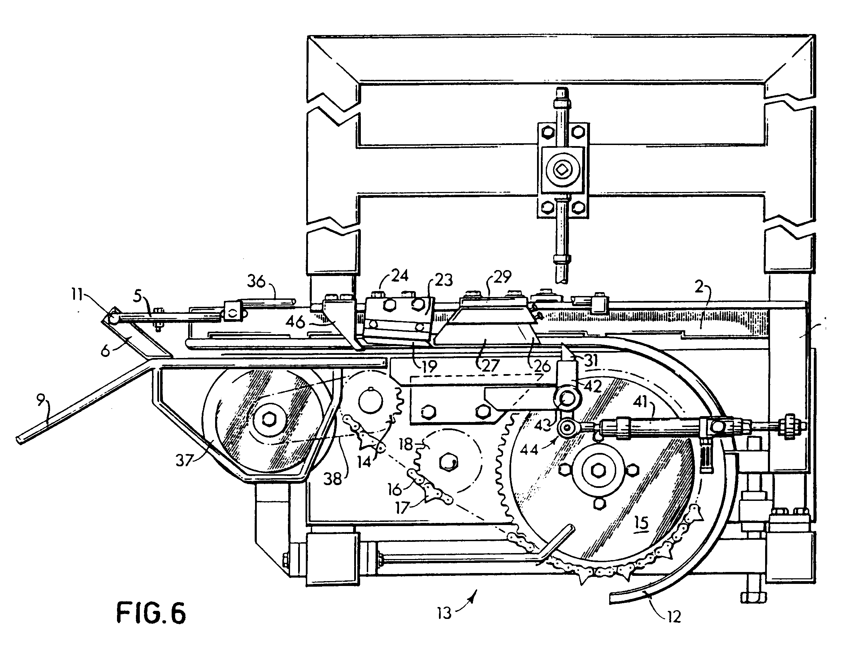

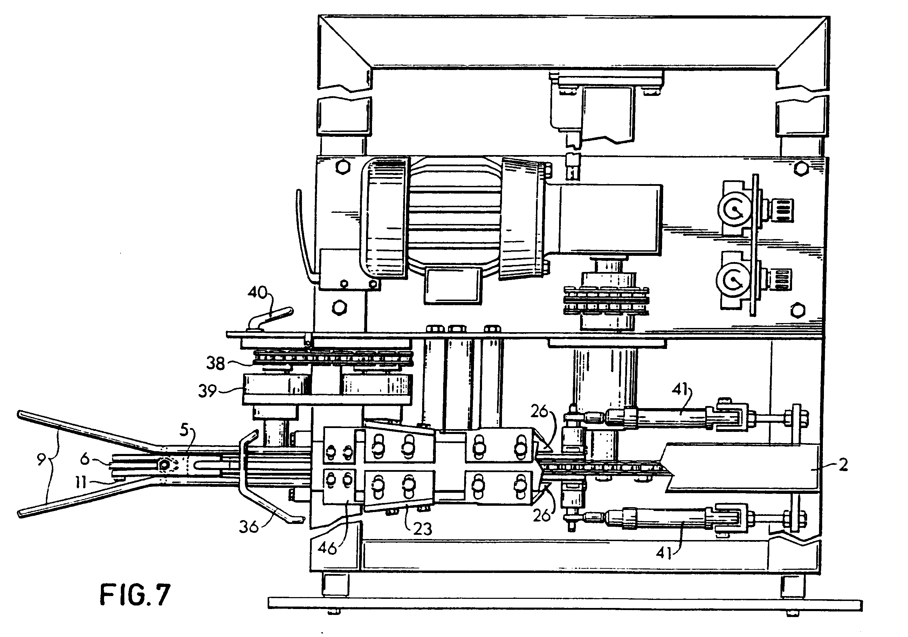

Figs. 6 and 7 show the invention in another preferred form in which the weights 33 are replaced with pneumatic cylinders 41. A pair of blade carrying members 42 are pivotably mounted about pivot pins 43. One end of each member 42 carries a lower blade 31 with the other end pivotably coupled to the pneumatic cylinder 41 by means of a ball and socket arrangement 44. So constructed, air pressure may be supplied to the cylinders to bias the lower blades with a selected force.

When the cylinders 41 are charged with air, the rod of each cylinder is retracted so as to pivot the blades 31 toward the direction of the oncoming birds. When a bird engages the cutting blades 31, these blades tend to cut the exterior skin and meat at the joints between the back and the thighs of the birds, tending to separate the backs from the thighs. The air charged cylinders 41 permit the blades 31 to pivot in the direction of movement of the birds so that the blades will not tend to cut through the bone at the joints of the birds, but will pivot so as to cause a slicing action with respect to the meat of the bird and cut around the joints.

Figs. 5-7 show a rotary disc cutter 37 which is movably mounted for movement between a raised position and a lowered position. The disc cutter 37 is powered by the small chain wheel 14 via chain 38. The disc cutter is mounted to a housing 39 which is pivotably mounted at one end about an axis extending through the small chain wheel 14. The other end of the housing is releasably secured to the framework by means of a bolt 40 having a quick-release handle.

As shown in Fig. 6, a pair of guide protrusions 46 are mounted to the blade carrying plate 2 and extend downwardly on either side of the blade carrying plate. As a poultry back portion passes the guide protrusions 46, the protrusions tend to seek the joint between the back and thighs of the poultry to guide the joints toward the first cutter blades 19.

### OPERATION

If all the blades 19, 26 and 31 have been correctly adjusted and if the speed ratio between the conveyor 3 and the chain 16 is also correct, the back portion 8, which was originally directed downwardly, is accelerated relative to the legs and rotates relative to the legs. The back portion thereby begins to tear loose from the legs 7 precisely at the location of the large chain wheel 15. The back portion is thus more or less torn off by the chain 16 and the guide plate 12, after incisions have been made in skin and tissue and muscles have been severed in the correct places.

Due to this optimum processing action, the so-called oysters 34 remain attached to the legs completely.

What remains is only the back portion 8 that is unattractive for direct consumption as it mainly consists of bone and fat. Furthermore, the peritoneum 35 now remains attached to the back portion 8.

In order to attain the above result, spreading guide rails 36, extending above the fixed blade pairs 19 and 26, may be employed as well to spread the legs apart somewhat.

In some cases it is desirable that the back portion 8 be halved, i.e., cut in the longitudinal direction without removing the legs from the back portion. In order to accomplish this without having to use a different apparatus, the invented apparatus may employ the movably mounted circular blade or disc cutter 37 disposed between the centering guide 6 and the chain 16, as seen in Figs. 5-7. When the circular blade 37 is in the elevated position, the above-described special working of the apparatus to remove the legs is ruled out.

An apparatus according to the present invention has the advantage of being capable of being added to an existing conveyor line, without the necessity of rehanging the poultry on a separate conveyor.

## Claims

1. An apparatus for removing the legs and thighs from the back portion of poultry, the breast portion of which has already been removed, comprising an overhead suspension conveyor (3) for moving the carcasses along a processing path with a series of spaced shackles (4) interspaced at regular intervals from which the poultry carcasses to be processed can be suspended upside down by their legs, and a processing station (13) mounted at a level below the overhead suspension conveyor and comprising blades (19, 26) for making an incision into the joints between the thighs and the back of the carcass, wherein the processing station comprises a gripper member (16, 17), movable along a closed conveyor loop at a speed that is higher than that of the overhead suspension conveyor, for gripping the back portion of a poultry carcass and moving it along a first path as the legs are carried by the overhead suspension conveyor along a second path, and a guide member (12) arranged adjacent the gripper member for maintaining the back portion in the first path, **characterized in that** said gripper member (16, 17) is arranged below said guide member (12), in that said gripper member and said guide member are arranged to grip the outer side of the back portion and to engage the back portion between the legs, respectively, and in that in the portion of said first path downstream said blades (19, 26, 31) said guide member and said gripper member extend along a path that diverges vertically from the processing path of said overhead suspension conveyor (3).

2. An apparatus according to claim 1, **characterized in that** said processing station (13) comprises a first pair of fixed blades (19) arranged on either side of and spaced transversely to said first path, said first pair of blades being adapted to cut near to yet not through the thigh bone to expose the joints.

3. An apparatus according to claim 2, **characterized in that** said guide member comprises a rail (12) which is generally inverted-V-shaped and comprises first and second surfaces adapted to seek the joints exposed by said first pair of blades (19).

4. An apparatus according to claim 3, **characterized in that** said processing station (13) comprises a second pair of fixed blades (26) arranged on either side of and spaced transversely to said first path, said second pair of blades being arranged downstream of said first pair of blades (19) and being adapted to cut the muscle of and the muscle adjacent the exposed joint between the thigh bone and the back portion to separate the bones of the joint.

5. An apparatus according to claim 4, **characterized in that** said processing station (13) comprises a third pair of pivotably arranged lower blades (31) arranged on either side of and spaced transversely to said first path and being adapted for determining the external tear lines between the back portion and the legs.

6. An apparatus according to claim 5, **characterized in that** said third pair of blades (31) is biased against rotation in one direction by means of a cantilevered weight (33).

7. An apparatus according to claim 5, **characterized in that** said third pair of blades (31) is biased against rotation in one direction by means of a pair of pneumatic cylinders (41).

8. An apparatus according to any one of the preceding claims, **characterized in that** said processing station (13) comprises means (5, 6, 12) for centering the poultry and guiding it along the blades (19, 26), wherein said centering means comprises a fork (5) that is cantilevered on a blade-carrying plate (2) and an elarging, suspended centering guide (6) pivotably mounted to said fork at one end of the centering guide.

9. An apparatus according to claim 8, **characterized by** first guide rails (9) for externally engaging poultry for guiding it towards said blade-carrying plate (2) and second guide rails (36) mounted onto said blade-carrying plate (2) for spreading the poultry legs.

10. An apparatus according to any one of the preceding claims, **characterized by** a rotating disc cutter (37) adapted for halving the back portion of the poultry, said rotating disc cutter being movably mounted for movement between a first position in the path of the poultry to halve the poultry and a second position out of the path of the poultry to avoid engaging the poultry.

11. A method for processing poultry, as the birds are moved along a processing path with the birds suspended invertedly by their legs from an overhead conveyor adapted to move the poultry along the processing path with the legs on either side of the overhead conveyor, wherein the legs are advanced at a first velocity and the backs of the birds are advanced along another conveyor at a velocity greater than the first velocity, the thighs are rotated at the joints affixed to the back in a direction towards the proximal end of the back bone to tend to open the joint between the thighs and the back and to stretch the tissue at this part of the joint;
a first blade cuts into the stretched tissue at the joint so as to permit the relative movement of the bones of the joint to open the joint; **characterized by**
cutting with a second blade between the bones of the joint through the tissue surrounding the joint to separate the bones of the joint; and
moving the back along a path that diverges vertically from the path of the legs to pull the back from the thighs.

## Patentansprüche

1. Eine Vorrichtung zum Entfernen von Beinen und Schenkeln von einem Geflügelrückenteil, dessen Brustteil bereits entfernt worden ist, die einen oberen Aufhängeförderer (3) um die Kadaver einer Verarbeitungsbahn entlang zu bewegen, umfasst, mit einer Reihe in regelmäßigen Abständen voneinander verteilt aufgestellten Bügel (4), woran zu verarbeitenden Geflügelkadaver an ihren Beinen verkehrt herum aufgehängt werden können, und eine an einer Ebene unterhalb des oberen Aufhängeförderers aufgestellte Verarbeitungsstation (13) umfasst mit Klingen (19, 26) um einen Einschnitt in den Gelenken zwischen den Schenkeln und dem Rücken des Kadavers zu machen, wobei die Verarbeitungsstation einen Greiferteil (16, 17) hat, der längs einer geschlossenen Fördererschleife, mit einer Geschwindigkeit, die höher ist als die des oberen Aufhängeförderers bewegbar ist, um den Rückenteil eines Geflügelkadavers zu greifen und es einer ersten Bahn entlang zu bewegen, während die Beinen durch den oberen Aufhängeförderer einer zweiten Bahn entlang getragen werden, und einen Führungsteil (12), der neben dem Greiferteil angeordnet ist um den Rückenteil in der ersten Bahn zu halten, **dadurch gekennzeichnet**, das der Greiferteil (16, 17) unterhalb des Führungsteils (12) angeordnet ist, das der Greiferteil und der Führungsteil so angeordnet sind, um die Außenseite des Rückenteils zu greifen, beziehungsweise den Rückenteil zwischen den Beinen anzugreifen, und das in dem Abschnitt der ersten Bahn stromabwärts von den Klingen (19, 26, 31) der Führungsteil und der Greiferteil sich einer Bahn entlang ausstrecken, die vertikal von der Verarbeitungsbahn des oberen Aufhängeförderers (3) divergiert.

2. Eine Vorrichtung nach Anspruch 1, **dadurch gekennzeichnet**, das die Verarbeitungsstation (13) ein erstes Paar fester Klingen (19), welche Klingen an jeder Seite der ersten Bahn und in Abständen quer dazu aufgestellt sind, umfasst, wobei das erste Klingenpaar geeignet ist, um in der Nähe von, jedoch nicht durch das Hüftknochen zu schneiden um die Gelenke aufzudecken.

3. Eine Vorrichtung nach Anspruch 2, **dadurch gekennzeichnet**, daß der Führungsteil eine Schiene (12) umfasst, die im wesentlichen umgekehrt V-förmig ist und erste und zweite Oberflächen, die geeignet sind um die Gelenke, die durch das erste Paar Klingen (19) aufgedeckt sind, zu suchen, umfasst.

4. Eine Vorrichtung nach Anspruch 3, **dadurch gekennzeichnet**, das die Verarbeitungsstation (13) ein zweites Paar festen Klingen (26), welche Klingen an jeder Seite der ersten Bahn und in Abständen quer dazu aufgestellt sind, umfasst, wobei das zweite Paar Klingen stromabwärts von dem ersten Paar Klingen (19) angeordnet ist und geeignet ist um den Muskel des aufgedeckten Gelenkes und den Muskel daneben zwischen dem Hüftknochen und dem Rückenteil zu schneiden, um die Knochen des Gelenks zu trennen.

5. Eine Vorrichtung nach Anspruch 4, **dadurch gekennzeichnet**, daß die Verarbeitungsstation (13) ein drittes Paar drehbar angeordneten unteren Klingeln (31), welche Klingen an jeder Seite von der ersten Bahn und in Abständen quer dazu aufgestellt sind und geeignet sind um die äußere Rißlinien zwischen dem Rückenteil und den Beinen zu bestimmen, umfasst.

6. Eine Vorrichtung nach Anspruch 5, **dadurch gekennzeichnet**, daß das dritte Paar Klingen (31) mittels eines freitragenden Gewichts (33) gegen Drehung in einer Richtung gespannt ist.

7. Eine Vorrichtung nach Anspruch 5, **dadurch gekennzeichnet**, daß das dritte Paar Klingen (31) mittels eines Paares pneumatischen Zylinder (41) gegen Drehung in einer Richtung gespannt ist.

8. Eine Vorrichtung nach einem der vorhergehenden Ansprüchen, **dadurch gekennzeichnet**, daß die Verarbeitungsstation (13) Mittel (5, 6, 12) zum Zentrieren des Geflügels, und zum Leiten dessen an den Klingen (19, 26) entlang, umfasst, wobei das Zentriermittel eine Gabel (5), die auf einer eine Klinge tragende Scheibe (2) freitragend ist und einen breitenden, aufgehängten Zentrierleiter (6), die an einem Ende des Zentrierleiters drehbar auf der Gabel aufgestellt ist, hat.

9. Eine Vorrichtung nach Anspruch 8, **gekennzeichnet durch** erste Führungsschienen (9) zum äußerlichen Angreifen des Geflügels um es zu der die Klinge tragende Scheibe (2) hinzuleiten und durch zweite Führungsschienen (36) zum Spreizen der Geflügelbeine, die auf der die Klinge tragende Scheibe (2) aufgestellt sind.

10. Eine Vorrichtung nach einem der vorhergehenden Ansprüchen, **gekennzeichnet durch** eine drehende Scheibenschneider (37), die zum Halbieren des Rückenteils des Geflügels geeignet ist, wobei die drehende Scheibe zum Bewegen zwischen einer ersten Position innerhalb der Geflügelbahn um das Geflügel zu halbieren und einer zweiten Position außerhalb der Geflügelbahn um das Angreifen des Geflügels zu vermeiden, bewegbar aufgestellt ist.

11. Eine Verfahren um Geflügel zu verarbeiten, während die Vögel einer Verarbeitungsbahn entlang geführt werden, wobei die Vögel verkehrt herum an ihren Beinen an einem obenliegenden Förderer aufgehängt werden, die geeignet ist um das Geflügel mit ihren Beinen an jeder Seite des obenliegenden Förderers an der Verarbeitungsbahn entlang zu bewegen, wobei die Beinen mit einer ersten Geschwindigkeit vorwärts gebracht werden und die Rücken der Vögel, mit einer Geschwindigkeit, die größer ist als die erste Geschwindigkeit einem anderen Förderer entlang bewogen werden, wobei die Schenkel an den Gelenken, die an dem Rücken befestigt sind, in einer Richtung nach dem proximalen Ende der Wirbelsäule gedreht werden, gerichtet auf das Öffnen des Gelenkes zwischen den Schenkeln und dem Rücken und um das Gewebe an diesem Teil des Gelenkes zu strecken, wobei eine erste Klinge in das ausgestreckte Gewebe an dem Gelenk schneidet, um es der relativen Bewegung der Gelenkknochen zu gestatten, das Gelenk zu öffnen, **gekennzeichnet durch** das Schneiden mit einer zweiten Klinge durch das Gewebe, welches das Gelenk umgibt zwischen den Knochen des Gelenks, um die Knochen des Gelenks zu trennen, und das Bewegen des Rückens an einer Bahn entlang, die vertikal von der Bahn der Beinen abweicht, um den Rücken von den Schenkeln zu ziehen.

## Revendications

1. Dispositif pour séparer les pattes et les cuisses de la partie arrière de volailles, dont la partie de poitrail a déja été enlevée, comprenant un transporteur supérieur (3), destiné à déplacer les carcasses sur une trajectoire de traitement avec une série d'attaches (4) espacées, réparties selon un espacement régulier, d'où les carcasses de volaille à traiter peuvent être suspendues, tête en bas par leurs pattes, et un poste de traitement (13), monté à un niveau placé en dessous du transporteur supérieur et comportant des lames (19, 26) destinées à opérer une incision dans les articulations entre les cuisses et l'arrière de la carcasse, dans lequel le poste de traitement comprend un organe de saisie (16, 17) déplaçable le long d'une boucle fermée de transporteur, à une vitesse supérieure à celle du transporteur supérieur, pour saisir la partie arrière d'une carcasse de volaille et la déplacer le long d'une première trajectoire, les pattes étant portées par le transporteur supérieur le long d'une seconde trajectoire, et un organe de guidage (12) étant disposé adjacent à l'organe de siasie, pour maintenir la partie arrière dans la première trajectoire, **caractérisé ence que** ledit organe de saisie (16, 17) est disposé au-dessous dudit organe de guidage (12), en ce que ledit organe de saisie et ledit organe de guidage sont agencés de manière à saisir le côté extérieur de la partie arrière et à venir en contact avec, la partie arrière entre les pattes respectivement, et en ce que, dans la partie de la première trajectoire située en aval desdites lames (19, 26, 31), ledit organe de guidage et ledit organe de saisie s'étendant le long d'une trajectoire allant en divergeant verticalement de la trajectoire de traitement dudit transporteur supérieur (3).

2. Dispositif selon la revendication 1, **caractérisé en ce que** ledit poste de traitement (13) comprend une première paire de lames fixes (19), agencées de chague côté et espacées transversalement par rapport à ladite première trajectoire, ladite première paire de lames étant adaptée pour découper près de l'os de la cuisse, mais sans le traverser pour découvrir les articulations.

3. Dispositif selong la revendication 2, **caractérisé en ce que** ledit organe de guidag comprend un rail (12) en forme générale de V inversé et comprend des première et deuxième surfaces adaptées pour rechercher les articulations découvertes par ladite première paire de lames (19).

4. Dispositif selon la revendication 3, **caractérisé en ce que** ledit poste de traitement (13) comprend une seconde paire de lames fixes (26), agencées de chaque coté et espacées transversalement par rapport à ladite première trajectoire, ladite seconde paire de lames étant disposée en aval de ladite première paire de lames (19) et étant adaptée pour couper le muscle même et le muscle adjacent à l'articulation découverte entre l'os de la cuisse et la partie arrière, en vue de séparer les os de l'articulation.

5. Dispositif selon la revendication 4, **caractérisé en ce que** ledit poste de traitement (13) comprend une troisième paire de lames inférieures (31) pivotantes, disposées de chaque côté et espacées transversalement par rapport à ladite première trajectoire, et adaptées pour déterminer les lignes de déchirement externes, entre la partie arrière et les pattes.

6. Dispositif selon la revendication 5, **caractérisé en ce que** ladite troisième paire de lames (31) est sollicitée contre une rotation dans une direction au moyen d'un poids en porte-à-faux (33).

7. Dispositif selon la revendication 5, **caractérisé en ce que** ladite troisième paire de lames (31) est sollicitée contre une rotation dans une direction au moyen d'une paire de vérins pneumatiques (41).

8. Dispositif selon l'une quelconque des revendications précédentes, **caractérisé en ce que** ledit poste de traitement (13) comprend des moyens (5, 6, 12), destinés à assurer le centrage des volailles et leur guidage le long des lames (19, 26), ledit moyen de centrage comprenant une fourche (5), montée en porte à faux sur une plaque porte-lame (2), et une guide de centrage (6) suspendu, élargi, monté pivotant sur ladite fourche, à une extrémité du guide de centrage.

9. Dispostif selon la revendication 8, **caractérisé par** des premiers rails de guidage (9), destinés à venir en contact extérieurement avec les volailles, pour les guider en direction de la plaque porte-lame (2), et des seconds rails de guidage (36), montés sur ladite plaque porte-lame (2), pour écarter les pattes des volailles.

10. Dispositif selon l'une quelconque des revendication précédentes, **caractérisé par** un découpeur à disque tournant (37), adapté pour couper en moitiés la partie arrière des volailles, ledit découpeur à disque tournant étant monté déplaçable pour permettre un déplacement entre une première position dans la trajectoire des volailles de façon à les couper en moitiès, et une deuxième position, hors de la trajectoire des volailles, pour éviter d'entrer en contact avec elles.

11. Procédé de traitement des volailles, lorsque les animaux sont déplacés sur une trajectoire de traitement en étant suspendus par leurs pattes à un transporteur supérieur adapté pour déplacer les volailles sur la trajectoire de traitement, les pattes se trouvant de chaque côté du transporteur supérieur, dans lequel les pattes sont avancées à une première vitesse et les arrières des volailles étant avencés sur un autre transporteur, à une vitesse supérieure à la première vitesse, en faisant tourner les cuisses à l'endroit des articulations fixées à l'arrière, dans une direction orientée vers l'extrémité proximale de l'os arrière, pour tendre à ouvrir l'articulation entre les cuisses et l'arrière et à déchirer les tissus à cet endroit de l'articulation;
une première lame découpant dans les tissus étirés à l'endroit de l'articulation, de façon à permettre un déplacement relatif des os de l'articulation pour ouvrir cette dernière, **caractérisé par** un découpage, à l'aide d'une seconde lame, entre les os de l'articulation dans les tissus entourant l'articulation, pour séparer les os de l'articulation et par le déplacement de l'arrière sur une trajectoire allant en divergeant verticalement par rapport à la trajectoire des pattes, pour retirer l'arrière à l'écart des cuisses.
